# EUROPEAN PATENT SPECIFICATION

(11) **EP 1 954 013 B1**
(45) Date of publication and mention of the grant of the patent: **21.06.2017**
(21) Application number: 07013599.1
(22) Date of filing: 11.07.2007
(51) Int. Cl.: H04M 1/725, H04M 1/23, H04M 1/723

(54) **Mobile communication terminal and method of operating the same**
Mobiles Kommunikationsendgerät und Betriebsverfahren dafür
Terminal de communication mobile et son procédé de fonctionnement

(30) Priority: 03.02.2007 KR 20070011290
(43) Date of publication of application: 06.08.2008
(73) Proprietor: LG Electronics Inc., Seoul 150-721 (KR)
(72) Inventor: Kim, Tae Hun, Inchun-si, 403-021 (KR); Jang, Se Hoon, Seoul, 152-053 (KR)
(74) Representative: Katérle, Axel

(56) References cited:
- WO-A-01/61443
- WO-A-02/093542
- US-A1- 2003 234 768
- US-A1- 2004 067 769
- US-B1- 6 957 397
- "User Guide Sony CMD-Z5 passage" SONY USER GUIDE CMD-Z5, XX, XX, 1 January 2000 (2000-01-01), page complete, XP002310503
- INTERNET CITATION, 2001, XP002347953, Retrieved from the Internet: URL:http://www.sonyericsson.com/downloads/ Z7_UG_R1a_EN.pdf [retrieved on 2005-10-06]

## Description

This application claims priority to Korean Application No. 2007-11290, filed in Korea on February 3, 2007.

### BACKGROUND OF THE INVENTION

### 1. Field of the Invention

The present invention relates to a mobile communication terminal and a method of operating the same in which a display screen is provided allowing a user to set an incoming call alert mode and/or a button alert mode via a simple key manipulation.

### 2. Description of the Related Art

A mobile communication terminal provides voice communication capabilities as well as multimedia capabilities. For example, a user can have a conversation with another party using the terminal, receive emails, play games, listen to music, watch videos, perform scheduling tasks, take pictures, etc. Thus, there are several different functions that may be performed using the mobile terminal.

As the number of functions provided by the terminal has increased, the menu options on the terminal have also increased. That is, the menu options are related to setting different features of each function. For example, the user can send a text message using a corresponding text message menu (e.g., by selecting a main menu, selecting a text message sub-menu and selecting a create text message sub-menu).

The mobile terminal also provides a variety of different ring tones, for example, that the user may assign to each caller in a call list. For example, a user may set a different ring tone for his or her mother, father, friend, etc. The user can also set a speaker volume for the ring tones or a voice volume of the terminal using the main menu and sub-menus provided with the terminal.

For example, the user can change or set the volume of the speaker by selecting a main menu, selecting a mobile terminal environment or settings sub-menu, selecting the speaker volume sub-menu, and then finally inputting a desired level of the speaker volume. Thus, the user has to select several different menus to change or set the volume.

US 6,957,397 relates to a technique for navigating through one or more menus of a handheld computer including a first button to cause the cursor to navigate through a plurality of menu items and to highlight a desired menu item, and a second button to cause the cursor to navigate through a plurality of menus when the curser is highlighting one of the menus or a first menu item, and to cause the cursor to highlight a previous menu item when the curser is highlighting a menu item other than the first menu item.

US 2004/0067769 relates to a foldable wireless communication device having a plurality of buttons thereon and having a dial for navigating through a previously displayed menu screen.

WO 01/61443 is directed to a mobile telephone having a line of icons displayed on a display screen and having a joystick enabling a user to navigate through the menus.

Document "User Guide Sony CMD-Z5" relates to a foldable mobile telephone having a plurality of buttons to navigate through menu screens and multiple user inputs including a jogdial located on the side of the telephone. A user may use the jogdial to navigate through menu items.

### SUMMARY OF THE INVENTION

Accordingly, one object of the present invention is to address the above-noted and other problems.

Another object of the present invention is to provide a mobile communication terminal and a method of operating the same having a very user convenient and flexible way to set or control terminal functions.

This object is solved by the present invention as defined in the independent claims. Preferred embodiments are defined by the dependent claims.

According to one aspect, a mobile communication terminal includes at least one side key, a display unit including a touch screen, and a controller configured to display on the display unit an interface screen when the at least one side key is manipulated, said interface screen including selectable items for setting at least one of a receiving call alert mode of the terminal and a button alert mode of the terminal.

In another aspect, a method of controlling a mobile communication terminal includes displaying an interface screen on a touch screen of the terminal when at least one side key is manipulated, in which the interface screen includes selectable items for setting at least one of a receiving calling alert mode of the terminal and a button alert mode on the terminal.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1 is a block diagram illustrating a mobile communication terminal according to an embodiment of the present invention;
FIG. 2 is a front view of a mobile communication terminal according to an embodiment of the present invention;
FIG. 3 is a perspective view of a mobile communication terminal according to an embodiment of the present invention;
FIG. 4(a) is a diagram illustrating an idle screen displayed on a touch screen of a mobile communication terminal according to an embodiment of the present invention;
FIG. 4(b) is a diagram illustrating a bell sound adjust display screen according to an embodiment of the present invention;
FIG. 5(a) is a diagram illustrating a vibration level adjustment display screen according to an embodiment of the present invention;
FIG. 5(b) is a diagram illustrating a maximum bell and vibration setting display screen according to an embodiment of the present invention;
FIG. 5(c) is a diagram illustrating a manner mode setting display screen according to an embodiment of the present invention;
FIG. 5(d) is a diagram illustrating a button sound level adjustment display screen according to an embodiment of the present invention;
FIGS. 6(a) and 6(b) are diagrams illustrating a bell sound level adjustment display screen according to another embodiment of the present invention; and
FIG. 7 is a flowchart illustrating an operation of a mobile communication terminal according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

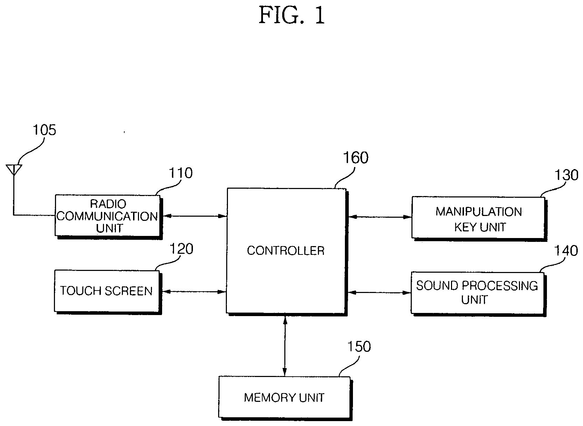

Turning first to FIG. 1, which is a block diagram illustrating a mobile communication terminal according to an embodiment of the present invention. As shown, the mobile terminal includes a radio communication unit 110 connected to an antenna 105 to transmit and receive a wireless signal in a communication system. The terminal also includes a controller 160 for controlling the overall operations of the mobile communication terminal.

In more detail, the controller 160 processes a signal received through the radio communication unit 110 and performs various services such as voice communication by transmitting a signal corresponding to the received signal through the radio communication unit 110. In addition, the radio communication unit 110 can be configured to transmit and receive a wireless signal according to different standards based on a particular provider or based an area in which the mobile communication terminal is used.

Further, as shown in FIG. 1, the mobile terminal also includes a manipulation key unit 130 that a user can use for inputting information into the mobile communication terminal. A memory unit 150 is also provided for storing data such as software applications used for driving the terminal. The memory unit 150 also stores user-created information such as a phone book list or a memo that is input by the user of the terminal.

Further, the manipulation key unit 130 includes a keypad, roller key, etc. that is used by the user to enter information into the terminal. As shown in FIG. 1, the mobile terminal also includes a touch screen 120 for inputting information such as an instruction into the terminal in addition to the manipulation key unit 130. In addition, the touch screen 120 also functions as a display for the terminal. Therefore, the user can input information/instructions, can select menu options, etc. and can also view information related to a status of the terminal on the touch screen 120.

The touch screen 120 can be used in combination with the key unit 130 or the touch screen 120 can be solely used to enter information. In the latter instance, the key unit 130 does not need to be included in the mobile terminal. A sound processor 140 is also included in the terminal and outputs different sounds (e.g., ringtones, alarms, a caller's voice, music, etc.) through a speaker included with the terminal.

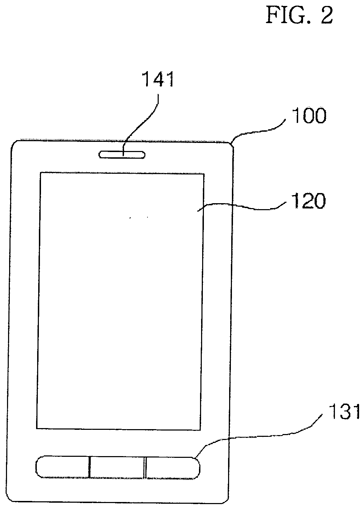

Turning next to FIG. 2, which is front view of a mobile terminal 100 according to an embodiment of the present invention. As shown in FIG. 2, the terminal 100 includes the touch screen 120 discussed above with respect to FIG. 1 and a speaker 141. The terminal 100 also includes a key input unit 131 for inputting information into the terminal 100 at a lower end of the touch screen 120. Thus, the user can input a suitable instruction into to the terminal 100 using both the key input unit 131 and the touch screen 120.

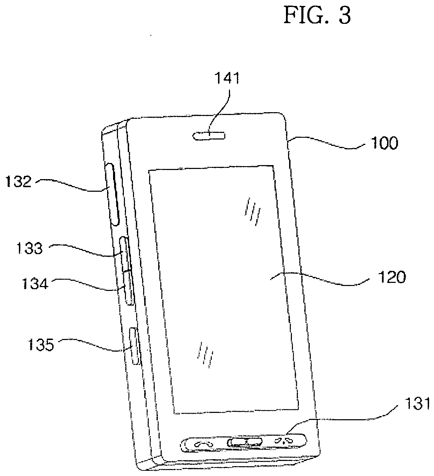

Next, FIG. 3 is a perspective view of the terminal 100 shown in FIG. 2 according to an embodiment of the present invention. As shown in FIG. 3, the terminal 100 also includes a plurality of side keys 132 to 135 in addition to the key input unit 131. In this example, four side keys 132 to 135 are provided. However, any number of side keys may be provided. The side keys 132 to 135 may also be provided at any location on the terminal 100.

Further, in one example, the side keys 133 and 134 are used for displaying menu selectable items allowing the user to set or change an incoming call alert mode such as level of a bell sound (e.g., ringtone, etc.), vibration level, etc. and a button alert mode such as a sound or vibration level when a button on the terminal is selected.

In addition, the incoming call alert mode corresponds to how the user is notified about an incoming call. For example, the user may be notified via a ringtone, a bell sound, vibration, etc. Similarly, the button alert mode corresponds to what happens when the user selects a button on the terminal. For example, the terminal may vibrate when a button is selected, a particular sound may be emitted through the speaker 141, and/or lights may flash on the terminal.

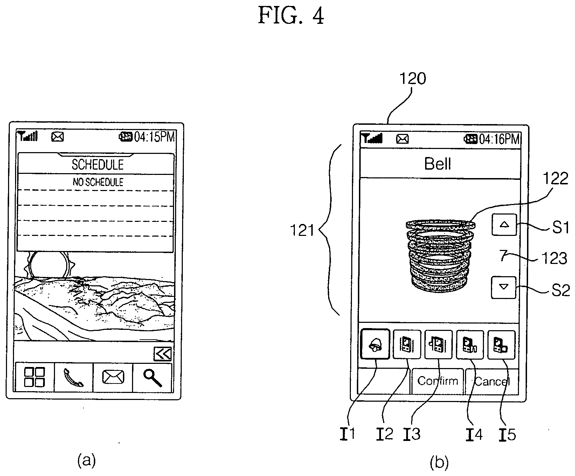

Turning next to FIG. 4(b), which illustrates a bell sound adjustment menu displayed on the touch screen 120 when one of the side keys 133 or 134 is selected from an idle state shown in FIG. 4(a). In more detail, the controller 160 controls the touch screen 120 to display a display interface screen 121 when one of the keys 133 or 134 is selected. As shown, the display screen 121 includes a plurality of different items that a user can select to set or change the incoming call alert and button alert modes. For example, the display screen 121 includes a graphic 122 representing a volume level, soft keys S1 and S2, a current volume indicator 123 and a plurality of selectable icons I1 to I5.

The icons I1 to I5 allow the user to select several different display screens including menus related to setting the incoming call alert mode and button alert mode. Therefore, when the user selects a particular icon I1 to I5, the controller 160 controls the display 120 to display a display screen 121 corresponding to the selected icon. As shown in FIG. 4(b), the display 120 also includes a confirm and cancel key allowing the user to confirm or cancel an operation, respectively.

Further, the controller 160 displays the soft keys S1 and S2 on the display screen 121 allowing the user to adjust a level of the incoming call alert and button alert modes. For example, the user can touch the soft key S1 to increase the volume level and select the soft key S2 to decrease the volume level. The user may also increase or decrease the volume level using the side keys 133 and 134.

In addition, if the display 120 is not a touch screen, the user can manipulate the soft keys S1 and S2 using the corresponding side keys 133 and 134 to increase or decrease the volume level. Further, the icons I1 to 15 may be selected using vertical and horizontal direction keys provided on a keypad included with the terminal. When the display is a touch screen, the user may simply touch a corresponding icon.

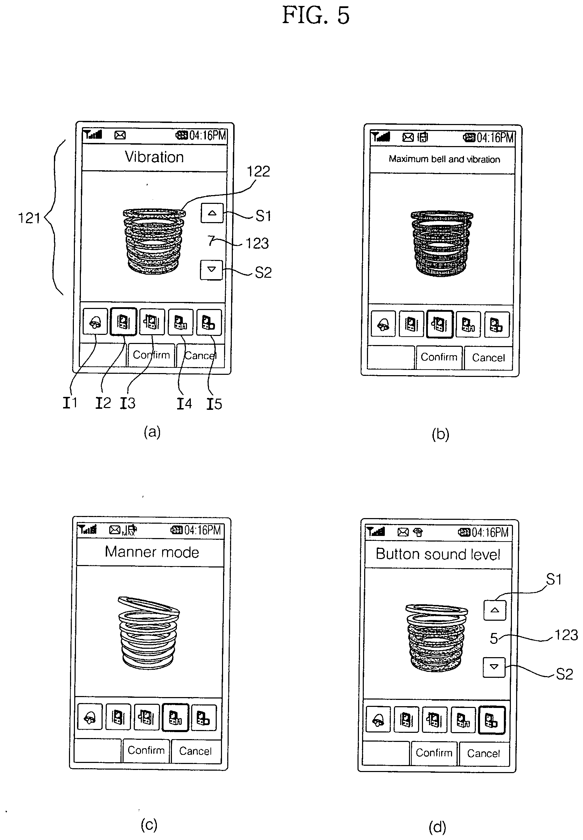

Turning next to FIG. 5(a), which is a diagram illustrating the display screen 121 for changing or setting the vibration level of the terminal. That is, the call alert mode is set as a vibration mode. As shown in FIG. 5(a) (and FIG. 4(b)), the display screen 121 includes a label on a top portion thereof indicating what menu has been selected. Thus, when the user selects the second icon I2, the controller 160 controls the display 120 to display the display screen 121 shown in FIG. 5(a).

FIGs. 5(b), 5(c) and 5(d) are diagrams illustrating display screens when the user selects the icons I3, I4 and I5, respectively. In more detail, and as shown in FIG. 5(b), when the user selects the third icon I3, an interface display screen for setting the incoming call alert mode to a maximum bell and vibration is displayed. Further, as shown in FIG. 5(c), when the user selects the icon I4, an interface display screen for setting the incoming call alert mode to be a manner mode is displayed. The manner mode in one example corresponds to the terminal flashing and vibrating when a call is received.

For example, backlights for each key may be flashed on and off. The touch screen may also be flashed on an off. That is, the entire area of the touch screen may be flashed on and off, or small portions of the touch screen may be sequentially turned on and off to give the appearance of the terminal flashing on and off. Thus, when the user selects the manner mode, he or she is setting the terminal to vibrate and flash lights when a call is received.

In addition, as shown in FIG. 5(d), when the user selects the icon I5, a display interface screen for adjusting a button sound level is displayed. That is, the icon 15 corresponds to the button sound alert mode. Thus, the user can set or change a button alert characteristic by using this menu. For example, when the button alert mode is set to a sound being emitted when a button is pressed, the user can increase or decrease the volume of the sound using the soft keys S1 and S2. The same applies to setting a level of vibration for the button alert mode.

In addition, for the maximum bell and vibration display screen shown in FIG. 4(b), the soft keys S1 and S2 are not displayed, because there is only one setting (i.e., a maximum setting). The same is true with the manner mode display screen shown in FIG. 4(c). However, the soft keys S1 and S2 are displayed in the menus for adjusting the bell sound, the vibration level and the button alert mode as shown in FIGS. 5(a), 5(b) and 5(d).

Further, because the display unit of the mobile terminal 100 includes the touch screen 120, the user can input an instruction into the terminal 100 through the soft keys S1 and S2. The user can also adjust the sound level using the side keys 133 and 134. In addition, the user can also view the graphic 122 on the display screen 121 to determine the current sound level or vibration level, because the color or shape of the graphic 122 is changed to reflect the current sound or vibration level. For example, the graphic 122 in FIG. 5(a) is completely filled in and the graphic 122 in FIG. 5(d) is partially filled in indicating the current level of the sound or vibration. In this instance, the current level indicator 123 can be eliminated from the display screen 121 to provide more room on the display screen 121.

In more detail, when the user sets the sound or vibration level, the controller 160 changes a color of the graphic 122, whereby the user can easily view the current sound or vibration level. In addition, when the user sets the maximum bell and vibration mode as in FIG. 5(b), the controller 160 changes the color of the graphic 122 (in this example, darkens the color) to indicate to the user that the maximum sound and vibration mode is set. A similar concept applies to the manner mode set in FIG. 5(c).

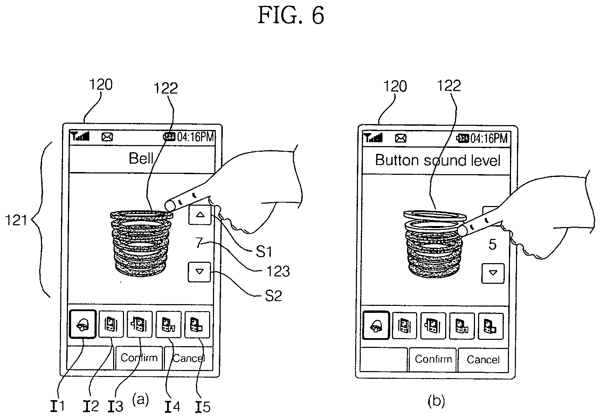

Turning next to the embodiment illustrated in FIG. 6. In this embodiment, the user touches and drags his or her finger on the touch screen 120 to automatically change the bell sound or vibration level. In more detail, as shown in FIGs. 6(a) and 6(b), the user touches the graphic 122 and drags his or her finger across the touch screen 120 to change the sound level from "7" to "5". The user can also increase the sound level by dragging his or her finger upwards rather than downwards on the graphic 122.

Thus, in this example, the user can adjust the sound and vibration level using three different methods: 1) using the side keys 133 and 134, 2) using the soft keys S1 and S2, and 3) by dragging the graphic 122. However, when the display unit does not include the touch screen 120 and is a general Liquid Crystal Display (LCD), the user can adjust the sound and vibration level using vertical and horizontal direction keys provided in the keypad.

Note that in the examples shown in FIG. 4, the bell sound interface screen was first displayed when on of the side keys 133 or 134 are manipulated. However, any of the other interface screens (e.g., vibration, maximum sound and vibration, etc.) may be displayed first rather than the bell sound interface screen. That is, a table may be created that lists what interface screen is to be first displayed when the side key 133 or 134 is activated. The table may also be used to list an order of the interface screens such that the bell sound interface screen shown in FIG. 4(a) is displayed when the side key 133 or 134 is pressed once, the vibration interface screen shown in FIG. 4(b) is displayed when the side key 133 or 134 is pressed twice in a successive manner, etc. The controller 160 may then refer to the table to determine which interface screen to display. The list of interface screens may also be set or changed by the user using provided menu options.

Further, the side keys 133 and 134 may be linked to a particular interface screen. For example, the side key 133 may be linked to the bell sound interface screen shown in FIG. 4(a) and the side key 134 may be linked to the vibration interface screen shown in FIG. 4(b). Thus, when the user presses the side key 133, the controller 160 displays the bell sound interface screen and when the user presses the side key 134, the controller 160 displays the vibration interface screen. The user may also link these screens may also be linked to the side keys 133 and 134 by using the appropriate menu options. This is particularly advantageous because the user may find that after using the terminal for some period of time, he or she determines they use a particular interface screen more than other interface screens. Thus, in this embodiment, the user can advantageously customize the actions of the side keys 133 and 134 according to his or her preferences.

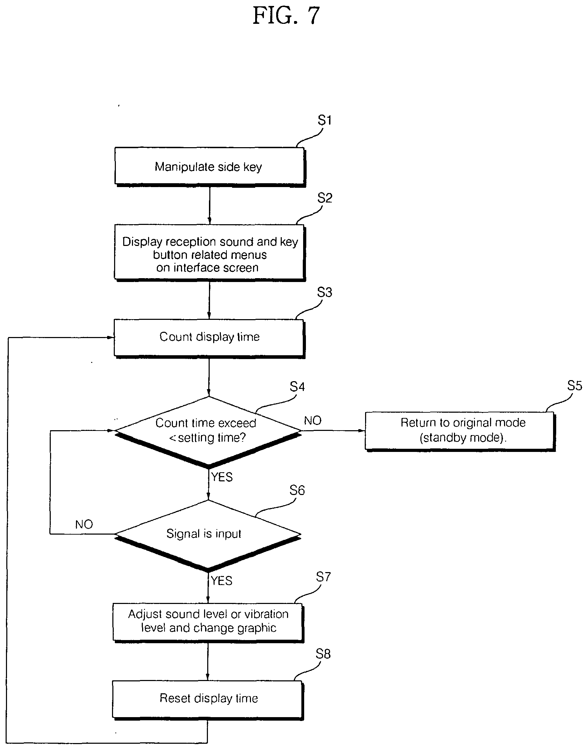

Turning next to FIG. 7, which is a flowchart illustrating an operation of a mobile communication terminal according to an embodiment of the present invention. As shown, when the side key 133 or 134 is manipulated (S1), the controller 160 displays the bell sound interface screen (or other interface screen as discussed above) on the touch screen 120 (S2) and then starts a timer to count an amount of time the interface screen is displayed (S3). The controller 160 then determines if the counted time is less than a predetermined amount of time (S4). If the counted time is less than the predetermined amount of time (Yes in S4), the controller 160 determines if the user has input an instruction into the interface screen (S6). If the counted time exceeds the predetermined amount of time (No in S4), the controller 160 sets the terminal back into the idle or standby mode (S5).

Further, if the user has not entered any additional input after the interface screen was displayed (No in S6), the process returns to step S4. The input signal may be a signal that is input through a soft key on the touch screen 120, a graphic dragging signal on the touch screen 120, or a signal through the side keys. However, if an additional signal is input into the terminal 100 (Yes in S6), the controller 160 performs the input instruction (S7) and then resets the counted display time to zero (S8).

In addition, the controller 160 can store a sound level or a vibration level of each menu before retuning to the standby mode. For example, if the user does not input an additional signal during a the predetermined amount of time after manipulating the icon I3 to display the interface screen shown in FIG. 5(b), the controller can set the call reception sound to be the maximum bell and vibration mode. That is, the current value is automatically set by the user not performing an additional input for a predetermined amount of time. The predetermined amount of time may also be set and changed by the user.

Further, in the example shown in FIG. 3, the side keys 133 and 134 are formed at the middle side of the terminal 100. However, the keys 133 and 134 may be formed at any other position on the terminal, such as a top side portion, bottom side portion, etc. Further, the side keys 133 and 134 are set to display the interface screens described above when they are activated in a standby mode. However, the side keys 133 and 134 may also be set to display the interface screens when activated in any other mode such as when the user is talking on a speaker phone of the terminal and wants to increase the volume.

As described above, the user of the mobile communication terminal according to embodiments of the present invention can adjust and set a call alert mode and button alert mode through a simple side key manipulation.

This invention may be conveniently implemented using a conventional general purpose digital computer or microprocessor programmed according to the teachings of the present specification, as will be apparent to those skilled in the computer art. Appropriate software coding can readily be prepared by skilled programmers based on the teachings of the present disclosure, as will be apparent to those skilled in the software art. The invention may also be implemented by the preparation of application specific integrated circuits whereby interconnecting an appropriate network of conventional computer circuits, as will be readily apparent to those skilled in the art.

As the present invention may be embodied in several forms, it should also be understood that the above-described embodiments are not limited by any of the details of the foregoing description, unless otherwise specified.

## Claims

1. A mobile communication terminal (100), comprising:
a display unit (120) including a touch screen (120);
**characterized in that** the terminal (100) comprises:
at least a first and second side key (132-135), and
a controller (160) configured to display on the display unit (120):
an interface screen (121) when one of the at least first and second side key (132-135) is manipulated, said interface screen (121) including selectable items for setting at least one of a receiving call alert mode of the terminal (100) and a button alert mode of the terminal (100), wherein the button alert mode corresponds to a mode in which a user is notified when a button on the terminal (100) is manipulated, and
a bell sound interface screen when the first side key (133) is manipulated or a vibration interface screen when the second side key (134) is manipulated, wherein the bell sound interface screen allows the user to set a volume level of a ringing sound corresponding to the receiving call alert mode and the vibration interface screen allows the user to set a vibration level of the terminal corresponding to the receiving call alert mode.

2. The mobile terminal of claim 1, wherein the selectable items comprise a plurality of icons (I1-5) representing different menus related to setting the at least one of the receiving call alert mode and the button alert mode.

3. The mobile terminal of claim 2, wherein the plurality of icons (I1-5) correspond to menus for setting the volume level of a ringing sound corresponding to the receiving call alert mode, setting the vibration level of the terminal corresponding to the receiving call alert mode, setting a level of the receiving call alert mode to be a maximum sound combined with a vibration of the terminal, setting the receiving call alert mode to be flashing lights with a vibration of the terminal, and setting a level of sound or vibration of the terminal corresponding to the button alert mode.

4. The mobile terminal of claim 3, wherein when one of the icons (I1-5) is selected, the controller is adapted to display the interface screen (14) corresponding to the associated menu on the display unit (120).

5. The mobile terminal of claim 4, wherein the interface screen (121) comprises a graphic (122) representing a current level for the selected menu.

6. The mobile terminal of claim 5, wherein the interface screen (121) further comprises:
soft keys (S1, S2) adapted to be manipulated to increase or decrease the current level for the selected menu when the selected menu is the menu for setting the volume level of the ringing sound corresponding to the receiving call alert mode, to set the vibration level of the terminal (100) corresponding to the receiving call alert mode, and to set the level of sound or vibration of the terminal (100) corresponding to the button alert mode; and
a current level indicator (13) adapted to indicate a current level for the selected menu.

7. The mobile terminal of claim 5, wherein the controller (160) is adapted to change at least one of a color and shape of the graphic (122) to reflect the current level for the selected menu option.

8. The mobile terminal of claim 7, wherein the controller (160) is adapted to change the color of the graphic (122) to reflect that the current level is the maximum level.

9. The mobile terminal of claim 5, wherein the controller (160) is adapted to adjust the level for the selected menu as the graphic (122) is touched and dragged through the touch screen (120).

10. The mobile terminal of claim 9, wherein the controller (160) is adapted to change at least one of a color and a shape of the graphic (122) as the graphic (122) is touched and dragged through the touch screen (120).

11. The mobile terminal of claim 1, wherein the controller (160) is adapted to display the interface screen (121) when the at least one side key (132-135) is manipulated and the terminal (100) is in a standby mode, and, when not detecting input on the interface screen (121) for a predetermined amount of time, to automatically set the level of the terminal (100) to be a level currently associated with the selected menu before returning to the standby mode.

12. The mobile terminal of claim 1, wherein the receiving call alert mode corresponds to a mode in which a user is notified about an incoming call.

13. The mobile terminal of claim 12, wherein the mode in which the user is notified when a button on the terminal (100) is pressed includes at least one of a sound and a vibration of the terminal (100).

14. A method of controlling a mobile communication terminal (100), said method **characterized by** comprising:
displaying an interface screen (121) on a touch screen (120) of the terminal (100) when one of at least a first and a second side key (132-135) is manipulated, said interface screen (121) including selectable items for setting at least one of a receiving call alert mode of the terminal and a button alert mode of the terminal (100), wherein the button alert mode corresponds to a mode in which a user is notified when a button on the terminal (100) is manipulated, and
displaying on the touch screen a bell sound interface screen when the first side key (133) is manipulated or a vibration interface screen when the second side key (134) is manipulated, wherein the bell sound interface screen allows the user to set a volume level of a ringing sound corresponding to the receiving call alert mode and the vibration interface screen allows the user to set a vibration level of the terminal corresponding to the receiving call alert mode.

15. The method of claim 14, wherein the selectable items comprise a plurality of icons (I1-5) representing different menus related to the setting the at least one of the receiving call alter mode and the button alert mode.

16. The method of claim 15, wherein the plurality of icons (I1-5) correspond to menus for setting the volume level of a ringing sound corresponding to the receiving call alert mode, setting the vibration level of the terminal corresponding to the receiving call alert mode, setting a level of the receiving call alert mode to be a maximum sound combined with a vibration of the terminal, setting the receiving call alert mode to be flashing lights with a vibration of the terminal, and setting a level of sound or vibration of the terminal corresponding to the button alert mode.

17. The method of claim 16, wherein when one of the icons (I1-5) is selected, the displaying step displays the interface screen (121) corresponding to the associated menu on the display unit (120).

18. The method of claim 17, further comprising displaying a graphic (122) representing a current level for the selected menu on the interface screen (121).

19. The method of claim 18, further comprising:
displaying soft keys (S1-S2) that may be manipulated to increase or decrease the current level for the selected menu when the selected menu is the menu for setting the volume level of the ringing sound corresponding to the receiving call alert mode, setting the vibration level of the terminal corresponding to the receiving call alert mode, and setting the level of sound or vibration of the terminal corresponding to the button alert mode; and
displaying a current level indicator (123) indicating a current level for the selected menu.

20. The method of claim 18, further comprising:
changing at least one of a color and shape of the graphic (122) to reflect the current level for the selected menu option.

21. The method of claim 20, wherein the changing step changes the color of the graphic (122) to reflect that the current level is the maximum level.

22. The method of claim 18, wherein the changing step adjusts the level for the selected menu as the graphic (122) is touched and dragged through the touch screen (120).

23. The method of claim 22, wherein the changing step changes at least one of a color and a shape of the graphic (122) as the graphic (122) is touched and dragged through the touch screen (120).

24. The method of claim 14, wherein the displaying step displays the interface screen (121) when the at least one side key (132-135) is manipulated and the terminal (100) is in a standby mode, and, when not detecting input on the interface screen (121) for a predetermined amount of time, the method further comprises automatically setting the level of the terminal (100) to be a level currently associated with the selected menu option before returning to the standby mode.

25. The method of claim 14, wherein the receiving call alert mode corresponds to a mode in which a user is notified about an incoming call.

26. The method of claim 25, wherein the mode in which the user is notified when a button on the terminal (100) is pressed includes at least one of a sound and a vibration of the terminal (100).

## Patentansprüche

1. Mobiles Kommunikationsendgerät (100), umfassend:
eine Anzeigeeinheit (120), die einen Touchscreen (120) umfasst;
**dadurch gekennzeichnet, dass** das Endgerät (100) umfasst:
mindestens eine erste und zweite seitliche Taste (132-135), und
eine Steuereinheit (160), die dazu eingerichtet ist, auf der Anzeigeeinheit (120) anzuzeigen:
einen Schnittstellenbildschirm (121), wenn eine der mindestens ersten und zweiten seitlichen Taste (132-135) betätigt wird, wobei der Schnittstellenbildschirm (121) auswählbare Elemente zum Festlegen eines Alarmmodus für eingehende Anrufe des Endgeräts (100) und/oder eines Schaltflächenalarmmodus des Endgeräts (100) umfasst, wobei der Schaltflächenalarmmodus einem Modus entspricht, in dem ein Benutzer benachrichtigt wird, wenn eine Schaltfläche auf dem Endgerät (100) betätigt wird, und
einen Schnittstellenbildschirm für Klingeltöne, wenn die erste seitliche Taste (133) betätigt wird, oder einen Schnittstellenbildschirm für Vibration, wenn die zweite seitliche Taste (134) betätigt wird, wobei es der Schnittstellenbildschirm für Klingeltöne dem Benutzer erlaubt, eine Lautstärkestufe eines Klingeltons, die dem Alarmmodus für eingehende Anrufe entspricht, einzustellen, und wobei es der Schnittstellenbildschirm für Vibration dem Benutzer erlaubt, eine Vibrationsstufe des Endgeräts, die dem Alarmmodus für eingehende Anrufe entspricht, einzustellen.

2. Mobiles Endgerät gemäß Anspruch 1, wobei die auswählbaren Elemente eine Vielzahl von Symbolen (I1-5) umfassen, die verschiedene Menüs in Bezug auf das Einstellen des Alarmmodus für eingehende Anrufe und/oder des Schaltflächenalarmmodus repräsentieren.

3. Mobiles Endgerät gemäß Anspruch 2, wobei die Vielzahl von Symbolen (I1-5) Menüs zum Einstellen der Lautstärkestufe eines Klingeltons, die dem Alarmmodus für eingehende Anrufe entspricht, zum Einstellen einer Vibrationsstufe des Endgeräts, die dem Alarmmodus für eingehende Anrufe entspricht, zum Einstellen, dass eine Stufe des Alarmmodus für eingehende Anrufe eine maximale Lautstärke kombiniert mit einer Vibration des Endgerät ist, zum Einstellen, dass der Alarmmodus für eingehende Anrufe blinkende Lichter mit einer Vibration des Endgeräts ist, und zum Einstellen einer Stufe der Lautstärke oder Vibration des Endgeräts, die dem Schaltflächenalarmmodus entspricht, umfasst.

4. Mobiles Endgerät gemäß Anspruch 3, wobei, wenn eines der Symbole (I1-5) ausgewählt wird, die Steuereinheit dazu eingerichtet ist, den Schnittstellenbildschirm (14) entsprechend dem zugehörigen Menü auf der Anzeigeeinheit (120) anzuzeigen.

5. Mobiles Endgerät gemäß Anspruch 4, wobei der Schnittstellenbildschirm (121) eine Grafik (122), die eine aktuelle Stufe für das ausgewählte Menü repräsentiert, umfasst.

6. Mobiles Endgerät gemäß Anspruch 5, wobei der Schnittstellenbildschirm (121) des Weiteren umfasst:
Softkeys (S1, S2), die dazu eingerichtet sind, betätigt zu werden, um die aktuelle Stufe für das ausgewählte Menü, wenn das ausgewählte Menü das Menü zum Einstellen der Lautstärkestufe für den Klingelton, die dem Alarmmodus für eingehende Anrufe entspricht, ist, zu erhöhen oder zu verringern, die Vibrationsstufe des Endgerät (100), die dem Alarmmodus für eingehende Anrufe entspricht, festzulegen, und die Stufe der Lautstärke oder Vibration des Endgerät (100), die dem Schnittstellenalarmmodus entspricht, einzustellen; und
einen Anzeiger (13) für die aktuelle Stufe, der dazu eingerichtet ist, eine aktuelle Stufe für das ausgewählte Menü anzuzeigen.

7. Mobiles Endgerät gemäß Anspruch 5, wobei die Steuereinheit (160) dazu eingerichtet ist, eine Farbe und/oder Form der Grafik (122) zu verändern, um die aktuelle Stufe für die ausgewählte Menüoption widerzuspiegeln.

8. Mobiles Endgerät gemäß Anspruch 7, wobei die Steuereinheit (160) dazu eingerichtet ist, die Farbe der Grafik (122) zu verändern, um widerzuspiegeln, dass die aktuelle Stufe die maximale Stufe ist.

9. Mobiles Endgerät gemäß Anspruch 5, wobei die Steuereinheit (160) dazu eingerichtet ist, die Stufe für das ausgewählte Menü anzupassen, wenn die Grafik (122) berührt und über den Touchscreen (120) gezogen wird.

10. Mobiles Endgerät gemäß Anspruch 9, wobei die Steuereinheit (160) dazu eingerichtet ist, eine Farbe und/oder eine Form der Grafik (122) zu verändern, wenn die Grafik (122) berührt und über den Touchscreen (120) gezogen wird.

11. Mobiles Endgerät gemäß Anspruch 1, wobei die Steuereinheit (160) dazu eingerichtet ist, den Schnittstellenbildschirm (121) anzuzeigen, wenn mindestens eine seitliche Taste (132-135) betätigt wird und sich das Endgerät (100) in einem Stand-by-Modus befindet, und, wenn für eine vorgegebene Zeitspanne keine Eingabe auf dem Schnittstellenbildschirm (121) erkannt wird, die Stufe des Endgeräts (100) automatisch auf eine Stufe, die derzeit zugehörig zu dem ausgewählten Menü ist, einzustellen, bevor zu dem Stand-by-Modus zurückgekehrt wird.

12. Mobiles Endgerät gemäß Anspruch 1, wobei der Alarmmodus für eingehende Anrufe einem Modus entspricht, in dem ein Benutzer über eingehende Anrufe benachrichtigt wird.

13. Mobiles Endgerät gemäß Anspruch 12, wobei der Modus, in dem der Benutzer benachrichtigt wird, wenn eine Schaltfläche auf dem Endgerät (100) gedrückt wird, einen Ton und/oder eine Vibration des Endgerät (100) umfasst.

14. Verfahren zum Steuern eines mobilen Kommunikationsendgeräts (100), wobei das Verfahren **dadurch gekennzeichnet ist, dass** es umfasst:
Anzeigen eines Schnittstellenbildschirms (121) auf einem Touchscreen (120) des Endgerät (100), wenn eine von mindestens einer ersten und zweiten seitlichen Taste (132-135) betätigt wird, wobei der Schnittstellenbildschirm (121) auswählbare Elemente zum Festlegen eines Alarmmodus für eingehende Anrufe des Endgeräts (100) und/oder eines Schaltflächenalarmmodus des Endgeräts (100) umfasst, wobei der Schaltflächenalarmmodus einem Modus entspricht, in dem ein Benutzer benachrichtigt wird, wenn eine Schaltfläche auf dem Endgerät (100) betätigt wird, und
Anzeigen auf dem Touchscreen eines Schnittstellenbildschirms für Klingeltöne, wenn die erste seitliche Taste (133) betätigt wird, oder einen Schnittstellenbildschirm für Vibration, wenn die zweite seitliche Taste (134) betätigt wird, wobei es der Schnittstellenbildschirm für Klingeltöne dem Benutzer erlaubt, eine Lautstärkestufe eines Klingeltons, die dem Alarmmodus für eingehende Anrufe entspricht, einzustellen, und wobei es der Schnittstellenbildschirm für Vibration dem Benutzer erlaubt, eine Vibrationsstufe des Endgeräts, die dem Alarmmodus für eingehende Anrufe entspricht, einzustellen.

15. Verfahren gemäß Anspruch 14, wobei die auswählbaren Elemente eine Vielzahl von Symbolen (I1-5) umfassen, die verschiedene Menüs in Bezug auf das Einstellen des Alarmmodus für eingehende Anrufe und/oder des Schaltflächenalarmmodus repräsentieren.

16. Verfahren gemäß Anspruch 15, wobei die Vielzahl von Symbolen (I1-5) Menüs zum Einstellen der Lautstärkestufe eines Klingeltons, die dem Alarmmodus für eingehende Anrufe entspricht, zum Einstellen einer Vibrationsstufe des Endgeräts, die dem Alarmmodus für eingehende Anrufe entspricht, zum Einstellen, dass eine Stufe des Alarmmodus für eingehende Anrufe eine maximale Lautstärke kombiniert mit einer Vibration des Endgerät ist, zum Einstellen, dass der Alarmmodus für eingehende Anrufe blinkende Lichter mit einer Vibration des Endgeräts ist, und zum Einstellen einer Stufe der Lautstärke oder Vibration des Endgeräts, die dem Schaltflächenalarmmodus entspricht, umfasst.

17. Verfahren gemäß Anspruch 16, wobei, wenn eines der Symbole (I1-5) ausgewählt wird, der Anzeigeschritt den Schnittstellenbildschirm (121) entsprechend dem zugehörigen Menü auf der Anzeigeeinheit (120) anzeigt.

18. Verfahren gemäß Anspruch 17, des Weiteren ein Anzeigen einer Grafik (122), die eine aktuelle Stufe für das ausgewählte Menü repräsentiert, umfassend.

19. Verfahren gemäß Anspruch 18, des Weiteren umfassend:
Anzeigen von Softkeys (S1-S2), die betätigt werden können, um die aktuelle Stufe für das ausgewählte Menü, wenn das ausgewählte Menü das Menü zum Einstellen der Lautstärkestufe für den Klingelton, die dem Alarmmodus für eingehende Anrufe entspricht, zum Einstellen der Vibrationsstufe des Endgerät (100), die dem Alarmmodus für eingehende Anrufe entspricht, und zum Einstellen der Stufe der Lautstärke oder Vibration des Endgerät (100), die dem Schnittstellenalarmmodus entspricht, ist, zu erhöhen oder zu verringern; und
Anzeigen eines Anzeigers (13) für die aktuelle Stufe, der eine aktuelle Stufe für das ausgewählte Menü anzeigt.

20. Verfahren gemäß Anspruch 18, des Weiteren umfassend:
Verändern einer Farbe und/oder Form der Grafik (122), um die aktuelle Stufe für die ausgewählte Menüoption widerzuspiegeln.

21. Verfahren gemäß Anspruch 20, wobei der Schritt des Veränderns die Farbe der Grafik (122) verändert, um widerzuspiegeln, dass die aktuelle Stufe die maximale Stufe ist.

22. Verfahren gemäß Anspruch 18, wobei der Schritt des Veränderns die Stufe für das ausgewählte Menü anpasst, wenn die Grafik (122) berührt und über den Touchscreen (120) gezogen wird.

23. Verfahren gemäß Anspruch 22, wobei der Schritt des Veränderns eine Farbe und/oder eine Form der Grafik (122) verändert, wenn die Grafik (122) berührt und über den Touchscreen (120) gezogen wird.

24. Verfahren gemäß Anspruch 14, wobei der Schritt des Anzeigens den Schnittstellenbildschirm (121) anzeigt, wenn mindestens eine seitliche Taste (132-135) betätigt wird und sich das Endgerät (100) in einem Stand-by-Modus befindet, und, wenn für eine vorgegebene Zeitspanne keine Eingabe auf dem Schnittstellenbildschirm (121) erkannt wird, das Verfahren des Weiteren ein automatisches Einstellen der Stufe des Endgeräts (100) auf eine Stufe, die derzeit zugehörig zu dem ausgewählten Menü ist, bevor zu dem Stand-by-Modus zurückgekehrt wird, umfasst.

25. Verfahren gemäß Anspruch 14, wobei der Alarmmodus für eingehende Anrufe einem Modus entspricht, in dem ein Benutzer über eingehende Anrufe benachrichtigt wird.

26. Verfahren gemäß Anspruch 25, wobei der Modus, in dem der Benutzer benachrichtigt wird, wenn eine Schaltfläche auf dem Endgerät (100) gedrückt wird, einen Ton und/oder eine Vibration des Endgerät (100) umfasst.

## Revendications

1. Terminal de communication mobile (100), comprenant :
une unité d'affichage (120) incluant un écran tactile (120) ;
**caractérisé en ce que** le terminal (100) comprend :
au moins des première et deuxième touches latérales (132 à 135), et
un contrôleur (160) configuré pour afficher sur l'unité d'affichage (120) :
un écran d'interface (121) lorsque l'une parmi les au moins première et deuxième touches latérales (132 à 135) est manipulée, ledit écran d'interface (121) incluant des éléments sélectionnables pour régler au moins l'un parmi un mode d'alerte de réception d'appel du terminal (100) et un mode d'alerte de bouton du terminal (100), dans lequel le mode d'alerte de bouton correspond à un mode dans lequel un utilisateur est notifié lorsqu'un bouton sur le terminal (100) est manipulé, et
un écran d'interface de sonnerie lorsque la première touche latérale (133) est manipulée ou un écran d'interface de vibration lorsque la deuxième touche latérale (134) est manipulée, dans lequel l'écran d'interface de sonnerie permet à l'utilisateur de régler un niveau de volume d'une sonnerie correspondant au mode d'alerte de réception d'appel et l'écran d'interface de vibration permet à l'utilisateur de régler un niveau de vibration du terminal correspondant au mode d'alerte de réception d'appel.

2. Terminal mobile selon la revendication 1, dans lequel les éléments sélectionnables comprennent une pluralité d'icônes (I1-5) représentant différents menus se rapportant au réglage d'au moins l'un parmi le mode d'alerte de réception d'appel et le mode d'alerte de bouton.

3. Terminal mobile selon la revendication 2, dans lequel la pluralité d'icônes (I1-5) correspond aux menus destinés à régler le niveau de volume d'une sonnerie correspondant au mode d'alerte de réception d'appel, régler le niveau de vibration du terminal correspondant au mode d'alerte de réception d'appel, régler un niveau du mode d'alerte de réception d'appel à un niveau de sonnerie maximal combiné à une vibration du terminal, régler le mode d'alerte de réception d'appel pour qu'il corresponde à des lumières clignotantes avec une vibration du terminal, et régler un niveau de son ou de vibration du terminal correspondant au mode d'alerte de bouton.

4. Terminal mobile selon la revendication 3, dans lequel lorsque l'une des icônes (I1-5) est sélectionnée, le contrôleur est adapté pour afficher l'écran d'interface (14) correspondant au menu associé sur l'unité d'affichage (120).

5. Terminal mobile selon la revendication 4, dans lequel l'écran d'interface (121) comprend un graphique (122) représentant un niveau actuel pour le menu sélectionné.

6. Terminal mobile selon la revendication 5, dans lequel l'écran d'interface (121) comprend en outre :
des touches programmables (S1, S2) adaptées pour être manipulées pour augmenter ou diminuer le niveau actuel pour le menu sélectionné lorsque le menu sélectionné est le menu destiné à régler le niveau de volume de la sonnerie correspondant au mode d'alerte de réception d'appel, pour régler le niveau de vibration du terminal (100) correspondant au mode d'alerte de réception d'appel, et pour régler le niveau de son ou de vibration du terminal (100) correspondant au mode d'alerte de bouton ; et
un indicateur (13) de niveau actuel adapté pour indiquer un niveau actuel pour le menu sélectionné.

7. Terminal mobile selon la revendication 5, dans lequel le contrôleur (160) est adapté pour changer au moins l'une parmi une couleur et une forme du graphique (122) pour refléter le niveau actuel pour l'option de menu sélectionnée.

8. Terminal mobile selon la revendication 7, dans lequel le contrôleur (160) est adapté pour changer la couleur du graphique (122) pour refléter que le niveau actuel est le niveau maximal.

9. Terminal mobile selon la revendication 5, dans lequel le contrôleur (160) est adapté pour ajuster le niveau pour le menu sélectionné à mesure que le graphique (122) est touché et glissé par l'intermédiaire de l'écran tactile (120).

10. Terminal mobile selon la revendication 9, dans lequel le contrôleur (160) est adapté pour changer au moins l'une parmi une couleur et une forme du graphique (122) à mesure que le graphique (122) est touché et glissé par l'intermédiaire de l'écran tactile (120).

11. Terminal mobile selon la revendication 1, dans lequel le contrôleur (160) est adapté pour afficher l'écran d'interface (121) lorsque la au moins une touche latérale (132 à 135) est manipulée et que le terminal (100) se trouve dans un mode de veille, et, lorsqu'aucune entrée n'est détectée sur l'écran d'interface (121) pendant une quantité de temps prédéterminé, pour régler automatiquement le niveau du terminal (100) à un niveau actuellement associé au menu sélectionné avant de revenir au mode de veille.

12. Terminal mobile selon la revendication 1, dans lequel le mode d'alerte de réception d'appel correspond à un mode dans lequel un utilisateur est notifié concernant un appel entrant.

13. Terminal mobile selon la revendication 12, dans lequel le mode dans lequel l'utilisateur est notifié lorsqu'un bouton sur le terminal (100) est enfoncé comprend au moins l'un parmi un son et une vibration du terminal (100).

14. Procédé de commande d'un terminal de communication mobile (100), ledit procédé étant **caractérisé en ce qu'**il comprend les étapes consistant à :
afficher un écran d'interface (121) sur un écran tactile (120) du terminal (100) lorsque l'une parmi au moins des première et deuxième touches latérales (132 à 135) est manipulée, ledit écran d'interface (121) incluant des éléments sélectionnables pour régler au moins l'un parmi un mode d'alerte de réception d'appel du terminal et un mode d'alerte de bouton du terminal (100), dans lequel le mode d'alerte de bouton correspond à un mode dans lequel un utilisateur est notifié lorsqu'un bouton sur le terminal (100) est manipulé, et
afficher sur l'écran tactile un écran d'interface de sonnerie lorsque la première touche latérale (133) est manipulée ou un écran d'interface de vibration lorsque la deuxième touche latérale (134) est manipulée, dans lequel l'écran d'interface de sonnerie permet à l'utilisateur de régler un niveau de volume d'une sonnerie correspondant au mode d'alerte de réception d'appel et l'écran d'interface de vibration permet à l'utilisateur de régler un niveau de vibration du terminal correspondant au mode d'alerte de réception d'appel.

15. Procédé selon la revendication 14, dans lequel les éléments sélectionnables comprennent une pluralité d'icônes (I1-5) représentant différents menus se rapportant au réglage d'au moins l'un parmi le mode d'alerte de réception d'appel et le mode d'alerte de bouton.

16. Procédé selon la revendication 15, dans lequel la pluralité d'icônes (I1-5) correspond à des menus destinés à régler le niveau de volume d'une sonnerie correspondant au mode d'alerte de réception d'appel, régler le niveau de vibration du terminal correspondant au mode d'alerte de réception d'appel, régler un niveau du mode d'alerte de réception d'appel à un niveau de sonnerie maximal combiné à une vibration du terminal, régler le mode d'alerte de réception d'appel pour qu'il corresponde à des lumières clignotantes avec une vibration du terminal, et régler un niveau de son ou de vibration du terminal correspondant au mode d'alerte de bouton.

17. Procédé selon la revendication 16, dans lequel lorsque l'une des icônes (I1-5) est sélectionnée, l'étape d'affichage affiche l'écran d'interface (121) correspondant au menu associé sur l'unité d'affichage (120).

18. Procédé selon la revendication 17, comprenant en outre l'affichage d'un graphique (122) représentant un niveau actuel pour le menu sélectionné sur l'écran d'interface (121).

19. Procédé selon la revendication 18, comprenant en outre les étapes consistant à :
afficher des touches programmables (S1 à S2) qui peuvent être manipulées pour augmenter ou diminuer le niveau actuel pour le menu sélectionné lorsque le menu sélectionné est le menu destiné à régler le niveau de volume de la sonnerie correspondant au mode d'alerte de réception d'appel, régler le niveau de vibration du terminal correspondant au mode d'alerte de réception d'appel, et régler le niveau de son ou de vibration du terminal correspondant au mode d'alerte de bouton ; et
afficher un indicateur (123) de niveau actuel indiquant un niveau actuel pour le menu sélectionné.

20. Procédé selon la revendication 18, comprenant en outre l'étape consistant à :
changer au moins l'une parmi une couleur et une forme du graphique (122) pour refléter le niveau actuel pour l'option de menu sélectionnée.

21. Procédé selon la revendication 20, dans lequel l'étape de changement change la couleur du graphique (122) pour refléter que le niveau actuel est le niveau maximal.

22. Procédé selon la revendication 18, dans lequel l'étape de changement ajuste le niveau pour le menu sélectionné à mesure que le graphique (122) est touché et glissé par l'intermédiaire de l'écran tactile (120).

23. Procédé selon la revendication 22, dans lequel l'étape de changement change au moins l'une parmi une couleur et une forme du graphique (122) à mesure que le graphique (122) est touché et glissé par l'intermédiaire de l'écran tactile (120).

24. Procédé selon la revendication 14, dans lequel l'étape d'affichage affiche l'écran d'interface (121) lorsque la au moins une touche latérale (132 à 135) est manipulée et que le terminal (100) se trouve dans un mode de veille, et, lorsqu'aucune entrée n'est détectée sur l'écran d'interface (121) pendant une quantité de temps prédéterminée, le procédé comprend en outre l'étape consistant à régler automatiquement le niveau du terminal (100) pour qu'il corresponde à un niveau actuellement associé à l'option de menu sélectionnée avant le retour au mode de veille.

25. Procédé selon la revendication 14, dans lequel le mode d'alerte de réception d'appel correspond à un mode dans lequel un utilisateur est notifié concernant un appel entrant.

26. Procédé selon la revendication 25, dans lequel le mode dans lequel l'utilisateur est notifié lorsqu'un bouton sur le terminal (100) est enfoncé comprend au moins l'un parmi un son et une vibration du terminal (100).
